(19) **Europäisches Patentamt**

**European Patent Office**

**Office européen des brevets**

(11) **EP 1 119 965 B1**

(12) **EUROPÄISCHE PATENTSCHRIFT**

(45) Veröffentlichungstag und Bekanntmachung des Hinweises auf die Patenterteilung:
**03.07.2002  Patentblatt 2002/27**

(21) Anmeldenummer: **99955740.8**

(22) Anmeldetag: **17.09.1999**

(51) Int Cl.⁷: **H04N 5/217**

(86) Internationale Anmeldenummer:
**PCT/DE99/02991**

(87) Internationale Veröffentlichungsnummer:
**WO 00/19711 (06.04.2000 Gazette 2000/14)**

(54) **VERFAHREN UND VORRICHTUNG ZUR BELICHTUNGSABHÄNGIGEN RAUSCH-KORREKTUR BEI ZEILEN- UND SPALTENADRESSIERBAREN BILDSENSOREN**

METHOD AND DEVICE FOR THE EXPOSURE-DEPENDENT NOISE CORRECTION IN IMAGE SENSORS WHICH CAN BE ADDRESSED IN LINES AND COLUMNS

PROCEDE ET DISPOSITIF POUR LA CORRECTION DU BRUIT EN FONCTION DE L'EXPOSITION A LA LUMIERE DANS DES CAPTEURS D'IMAGES ADRESSABLES PAR LIGNES ET COLONNES

(84) Benannte Vertragsstaaten:
**DE FR GB IT**

(30) Priorität: **30.09.1998   DE 19845067**

(43) Veröffentlichungstag der Anmeldung:
**01.08.2001   Patentblatt 2001/31**

(73) Patentinhaber: **Micronas Munich GmbH
81541 München (DE)**

(72) Erfinder:
• **KOREN, Ivo
  D-81543 München (DE)**
• **GEIB, Heribert
  D-85567 Grafing (DE)**
• **RAMACHER, Ulrich
  D-81545 München (DE)**

(74) Vertreter: **Patentanwälte
Westphal, Mussgnug & Partner
Mozartstrasse 8
80336 München (DE)**

(56) Entgegenhaltungen:
EP-A- 0 677 957          US-A- 5 129 595
US-A- 5 331 428          US-A- 5 455 622
US-A- 5 631 466

**Beschreibung**

Die Erfindung betrifft in erster Linie einen CMOS-Bildsensor, der im Gegensatz zu einem CCD-Sensor direkt, wie ein üblicher Schreib-/Lesespeicher, adressiert werden kann. Schwankungen der Technologie-Parameter führen bei einem CMOS-Sensor, zusätzlich zu einem 1/f-Rauschen der einzelnen Bildpunkte, zu einem Rauschen (Fixed Pattern Noise, FPN) das im wesentlichen einem festen Bildmuster entspricht. Ursachen für dieses Rauschen sind fertigungsbedingte Schwankungen der Einsatzspannung der Transistoren (Offset-FPN), der Verstärkung zwischen den Auslesepfaden (Gain-FPN) und der Leckströme in den Sensorzellen (Dark-FPN).

Das Offset-Rauschen eines einzelnen Pixels kann beispielsweise durch mehrfaches Abtasten und Korrelation der ausgelesenen Werte (Correlated Double Sampling, CDS) unterdrückt werden. Zur Korrektur des Offset-FPN kann beispielsweise eine Differenzbildung mit einem bei geschlossener Blende aufgenommenen Referenzbild erfolgen, wobei das Referenzbild nach jedem Bild neu oder aber nur einmal aufgenommen wird. Wird ein solches Referenzbild jedesmal aufgenommen, ist die maximal mögliche Bildrate stark reduziert und wenn das Referenzbild nur einmal aufgenommen wird, ist eine Dunkelstromkorrektur nur schlecht möglich. Eine weitere Möglichkeit besteht darin, eine stets abgedunkelte Zeile zu lesen und vom Inhalt des Zeilenspeichers zu substrahieren, wodurch eine Speicherersparnis aber nur eine teilweise Korrektur des Dunkelstromes resultiert. Eine Gain-FPN-Korrektur wird bspw. in High End Systemen nachträglich mit digitaler Signalverarbeitung durchgeführt, wobei die Korrektur durch pixelweise Multiplikation von Signal mit abgespeichertem Korrekturkoeffizienten erfolgt und einen sehr hohen Aufwand an Hardware und Speicher erfordert.

US-A-5 455 622 offenbart eine Vorrichtung zur Kompensation des Offsets eines von Null verschiedenen Dunkelstromanteils in einem analogen CCD-Bildsignal. Das sequentiell ausgelesene analoge Bildsignal wird zunächst bildpunktweise verstärkungskorrigiert, wodurch der Dunkelstromanteil entsprechend bildpunktweise verändert wird. Das so erzeugte Signal wird wiederum bildpunktweise additiv korrigiert, um das ursprüngliche Niveau des Dunkelstromanteils wiederherzustellen.

US-A-5 631 466 und EP-A-0 677 957 offenbaren ein System zum Kalibrieren von IR-Sensoren in einem Sensorfeld. Mittels einer geschlossenen Regelschleife werden analoge, sequentiell ausgelesene Bildsignale der einzelnen Sensoren kompensiert im Hinblick auf untereinander gleichförmige Verstärkung, Empfindlichkeit usw.

US-A-5 331 428 offenbart ein System zur Kalibrierung eines CCD-Bildsensors durch bildpunktweise Verstärkungs- und Offset-Kompensation angewandt auf ein analoges oder digitalisiertes sequentielles Bildsignal.

US-A-5 129 595 offenbart ein IR-Bilderfassungssystem mit individuell adressierbaren Sensorelementen und sequentieller Übergabe der analogen Sensorsignale an eine Verarbeitungseinheit. Vor der D/A-Wandlung der Sensorsignale wird eine grobe Offset-Kompensation vorgenommen, danach erfolgen eine feine Offset-Kompensation auf der Basis eines Mittelwertes der Bildsignale über mehrere Vollbilder sowie eine bildpunktweise Einstellung der Verstärkung (Multiplikation) zur Erzielung gleichförmiger Eigenschaften unter den einzelnen Sensorsignalen.

Die der Erfindung zugrundeliegende Aufgabe besteht nun darin, ein Verfahren und eine Vorrichtung zur belichtungsabhängigen Rausch-Korrektur bei zeilen- und spaltenadressierbaren Bildsensoren anzugeben, das/die bei geringem Aufwand eine möglichst große Güte der Korrektur des FNP-Rauschens ermöglicht.

Diese Aufgabe wird erfindungsgemäß hinsichtlich des Verfahrens durch die Merkmale des Patentanspruchs 1 und hinsichtlich der Vorrichtung durch die Merkmale des Patentanspruchs 6 gelöst. Weitere Ansprüche betreffen vorteilhafte Ausgestaltungen des erfindungsgemäßen Verfahrens und der erfindungsgemäßen Vorrichtung.

Besondere Vorteile der Erfindung liegen in der Programmierbarkeit der Korrekturparameter und in der Tatsache, daß die FNP-Korrektur auf die Beleuchtungsverhältnisse abstimmbar ist und die Korrekturanteile einzeln zu- und abschaltbar sind.

Nachfolgend wird die Erfindung anhand von, in den Zeichnungen dargestellten, bevorzugten Ausführungsbeispielen näher erläutert. Dabei zeigt

Figur 1     ein Diagramm zur Erläuterung eines erfindungsgemäßen Verfahrens,

Figur 2     ein Blockschaltbild zur Erläuterung der erfindungsgemäßen Vorrichtung und

Figur 3     ein Bildpunktsensorfeld mit belichteten und unbelichteten Bildpunkten.

Die Erfindung setzt voraus, daß in einem ersten Schritt entweder eine A/D-Wandlung mit hoher Auflösung oder besser, weil schneller, eine A/D-Wandlung mit geringerer Auflösung und nachfolgender Kennlinienlinearisierung erfolgt, wobei erfindungsgemäß in einem zweiten Schritt ein aufgrund der spaltenweise vorhandenen Leseeinrichtungen spaltenweise auftretender Spannungs-Offset korrigiert wird, in einem dritten Schritt eine Korrektur von Inhomogenitäten der Pixelempfindlichkeit sowie der Verluste durch Umladeprozesse erfolgt, und in einem vierten und letzten Schritt der Dunkelstrom eines Pixels korrigiert wird, der überwiegend auf Leckströme im Pixel zurückzuführen ist.

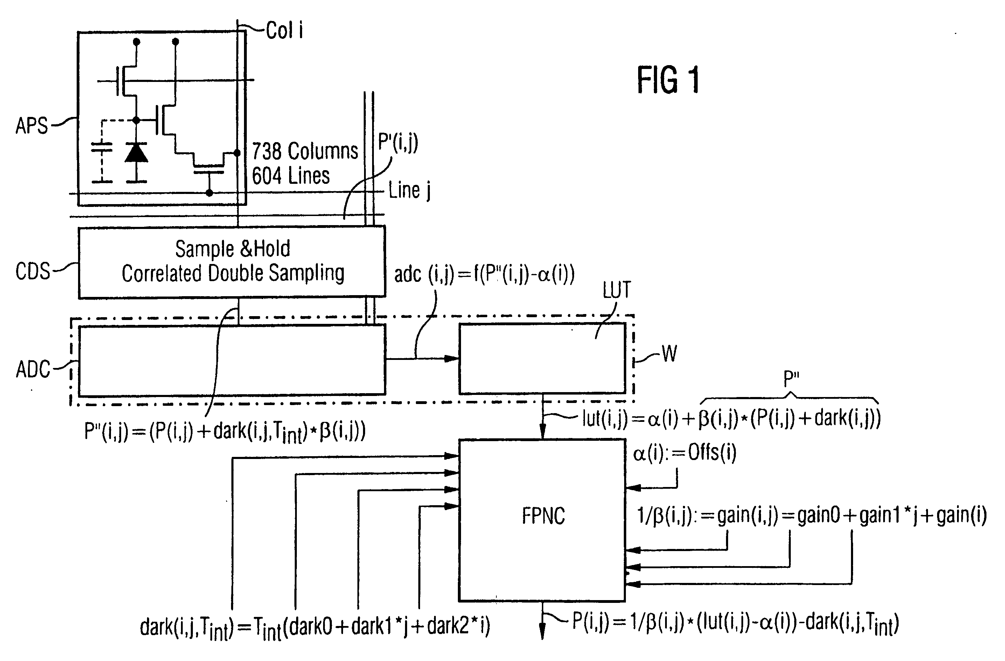

In Figur 1 ist ein Blockschaltbild mit einem Bildpunktsensorfeld APS, einer nachgeschalteten Korrelationseinrichtung CDS, einem der Einrichtung CDS nachgeschalteten Analog-Digital-Wandler W und schließlich einer Korrektureinrichtung FPNC dargestellt. Der Wandler W besteht beispielsweise aus einem A/D-Wandler mit hoher Auflösung, z. B. 10..12 Bit, oder hier aus einem A/D-Wandler mit geringerer Auflösung, z. B. 8 Bit, und einer dem Wandler nachgeschalteten Linearisierungseinrichtung LUT. Das Speicherfeld APS ist lediglich durch Spalten Col i und Zeilen Line j sowie durch eine beispielhaft gezeigte Bildpunktsensorzelle angedeutet. Die Leitungen für die Spalten Col i sind über die Korrelationseinrichtung CDS jeweils mit einem zugehörigen Analog-Digital-Wandler eines Wandlermoduls ADC verbunden. Aus dem Bildpunktsensorfeld werden mit einem Dunkelstrom-Rauschen dark(i,j,$T_{int}$), einem Offset-Rauschen und einem Verstärkungs-Rauschen behaftete Bildpunktwerte P' (i,j) in die Korrelationseinrichtung ausgelesen und die Korrelationseinrichtung liefert vom Offset-Rauschen der einzelnen Bildpunkte befreite aber mit einem zusätzlichen Verstärkungs-Rauschen behaftete Bildpunktwerte P''(i,j) für die Analog-Digital-Wandler. Das vom jeweiligen Analog-Digital-Wandler erzeugte Ausgangssignal adc (i,j) kann durch folgenden Zusammenhang beschrieben werden:

$$adc(i,j) = f(P''(i,j) + \alpha(i,j))$$

da die Bildpunktwerte P''(i,j) durch die Korrelationseinheit und durch den Analog-Digital-Wandler ein Offset und durch den Wandler ein funktionaler Zusammenhang zwischen Eingangs- und Ausgangsgrößen bewirkt wird. Ein Analog-Digital-Wandler aus dem Modul ADC weist beispielsweise eine Auflösung von 8 Bit auf und adressiert durch sein Ausgangssignal adc(i,j) die Linearisierungseinheit LUT in Form einer gespeicherten Wertetabelle (Look Up Table), deren Ausgangswortbreite beispielsweise 12 Bit beträgt. Die Linearisierung erfolgt dadurch, daß aus der stufenförmigen Zuordnungsfunktion des Analog-Digital-Wandlers ein zum Signal adc(i,j) zugehöriger unterer Stufenwert und ein oberer Stufenwert zugrundegelegt wird, aus diesen beiden der Mittelwert mit einer erhöhten Auflösung, also hier beispielsweise mit 12 Bit, ausgegeben wird. Diese Methode gewährleistet eine sehr geringe integrale Nichtlinearität, die vergleichbar ist mit einem üblichen linearen Analog-Digital-Wandler mit 11 bis 12 Bit Genauigkeit. Der verwendete 8 Bit Digital-Analog-Wandler hat eine nichtlineare Kennlinie, die für kleine Signalpegel eine feinere Quantisierung erlaubt. Da für große Grauwerte eine geringere Genauigkeit ausreicht ist die Bildqualität vergleichbar mit einem 10 Bit Wandler, wobei allerdings die Wandlung schneller erfolgt.

Die Linearisierungseinheit LUT liefert ein Signal lut(i,j), das wie folgt beschreibbar ist:

$$lut(i,j) = \alpha(i) + \beta(i,j) * (P(i,j) - dark(i,j))$$

In der eigentlichen Korrektureinheit FPNC wird nun ein korrigierter Bildpunktwert P(i,j) nachfolgender Beziehung bestimmt:

$$P(i,j) = 1/\beta(i,j) * (lut(i,j) - \alpha(i)) - dark(i,j,T_{int})$$

berechnet, wobei die Parameter $\alpha(i)$, $1/\beta(i,j)$ und dark(i,j,$T_{int}$) vorher bestimmt werden und der Korrektureinheit FPNC zugeführt werden.

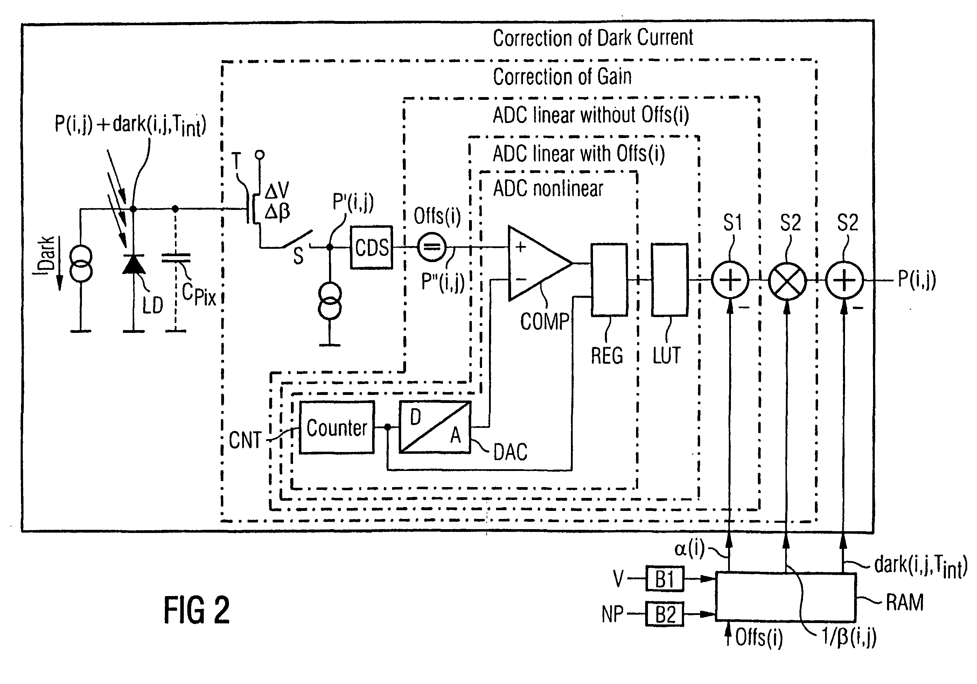

Eine entsprechende Vorrichtung ist in Figur 2 gezeigt, wobei ein einzelner Bildpunktsensor durch seine Ersatzschaltung dargestellt ist und über einen Verstärkertransistor T und einen elektronischen Auswahlschalter S die Bildpunktwerte P(i,j) + dark(i,j,$T_{int}$) am Eingang der Korrelationseinheit CDS aufschaltet. Der Analog-Digital-Wandler ist hier in Form einer Schaltung aus einem Komparator COMP, einem Register REG, einem Zähler CNT und einem Digital-Analog-Wandler DAC gebildet, wobei der Operationsverstärker den Analogausgangswert des Digital-Analog-Wandlers mit dem analogen Eingangssignal vergleicht, wobei der Digital-Analog-Wandler durch einen Zähler CNT eingangsseitig versorgt wird und wobei der Zählerstand des Zählers in das Register REG übernommen wird, sofern das analoge Eingangssignal mit dem Ausgangssignal des Digital-Analog-Wandlers übereinstimmt. Es ist auch hier eine Linearisierungseinheit LUT angedeutet, die eingangsseitig mit dem Analog-Digital-Wandler, also dem Ausgang des Registers REG verbunden ist. Die Ausgangswerte der Linearisierungseinheit LUT sind einem ersten Summierer S1 zugeführt, dessen Ausgang mit einem Eingang eines Multiplizierers M verbunden ist. Der Ausgang des Multiplizierers M ist mit einem Eingang eines zweiten Summierers S2 verbunden, der die korrigierten Bildpunktwerte P(i,j) liefert. Die zweiten Eingänge der Summierer und des Multiplizierers sind mit einem Schreib-/Lesespeicher RAM verbunden, wobei dieser Offsetwerte $\alpha(i)$, inverse Verstärkungswerte $1/\beta(i,j)$ und Dunkelstromwerte dark(i,j,$T_{int}$) liefert. Der Offsetwert $\alpha(i)$ wird im Summierer S1 subtrahiert. Für $\alpha(i)$ werden für jede Spalte Offsetwerte Offs(i) für jede Spalte gespeichert. Aus belichtbaren Bildpunktsensoren V werden einer ersten Berechnungseinheit B1 Werte für die inverse Ver-

stärkung $1/\beta(i,j)$ gebildet. Aus nicht belichtbaren Bildpunktsensoren werden mit einer zweiten Berechnungseinheit B2 Dunkelstromwerte $dark(i,j,T_{int})$ berechnet, in dem Schreib-/Lesespeicher abgelegt und dem Summierer S2 mit negativem Vorzeichen zugeführt.

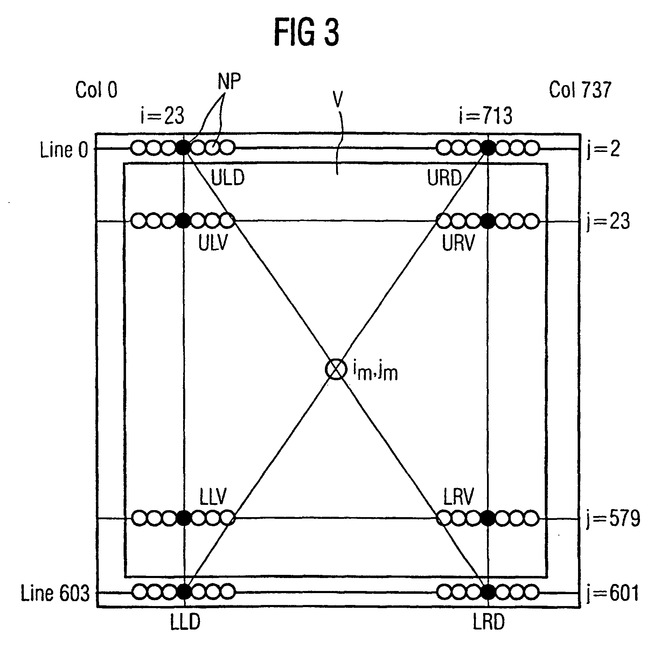

In Figur 3 ist ein zeilen- und spaltenadressierbarer Bildsensor mit belichtbaren Bildpunktsensoren V und nichtbelichtbaren Bildsensorpunkten NP dargestellt. Der Bildsensor hat hier beispielsweise Zeilen Line 0 .... Line 603 und Spalten Col 0 ... Col 737. Eine linke ausgewählte Spalte ist dabei die Spalte i=23 und eine rechte ausgewählte Spalte ist dabei die Spalte i=713. Darüber hinaus ist eine ausgewählte obere Zeile mit j=23 und eine untere ausgewählte Zeile mit j=579 im belichtbaren Bildbereich angegeben. Schließlich sind noch eine Zeile j=2 und eine Zeile j=601 im nichtbelichtbaren Bereich des Bildsensorfeldes dargestellt. Ein nichtbelichtbarer oberer linker Bildpunktsensor ULD mit den Koordinaten i=23 und j=2, ein nichtbelichtbarer oberer rechter Bildpunktsensor mit den Koordinaten i=713 und j=2, ein nichtbelichtbarer linker unterer Bildpunktsensor LLD mit den Koordinaten i=23, j=601 und ein nichtbelichtbarer rechter unterer Bildpunktsensor LRD mit den Koordinaten i=713 und j=601 sind ebenfalls angegeben. Im belichtbaren Bereich des Bildsensorfeldes ist ein oberer linker Bildpunktsensor mit den Koordinaten i=23 und j=23, ein oberer rechter Bildpunktsensor mit den Koordinaten i=713 und j=23, ein unterer linker Bildpunktsensor mit den Koordinaten i=23 und j=579 sowie ein unterer rechter Bildpunktsensor LRV mit den Koordinaten i=713 und j=579 dargestellt. In Figur 3 sind schließlich noch eine mittlere Zeilennummer jm und eine mittlere Spaltennummer angegeben sind.

Zur Bestimmung des Offsets Offs(i) bzw. $\alpha(i)$ wird eine nichtbelichtete Zeile, beispielsweise die Zeile i=2, mit minimal eingestellter Integrationszeit $T_{int}$ komplett ausgelesen, durch die Analog-Digital-Wandler gewandelt und anschließend durch die Linearisierungseinheit LUT korrigiert und in den Schreib-/Lesespeicher RAM als Wert $\alpha(i)$ eingeschrieben. Da das offset-korrigierte Signal auch einen Amplitudengang in Zeilen- und Spaltenrichtung aufweist, der durch einen sich ändernden Verstärkungsfaktor bedingt ist, muß das offset-korrigierte Signal mit dem jeweiligen inversen Verstärkungsfaktor $1/\beta(i,j)$ multipliziert werden. Abweichungen in der Verstärkung des Sourcefolgers mit dem Transistor T und einer Pixelkapazität $C_{Pix}$ in Figur 2 bedingen eine Abhängigkeit des Faktors von Zeile i und Spalte j. Der Sourcefolger im Bildpunktsensor arbeitet mit einer Stromquelle in jeder Spalte zusammen, so daß auch die Schwankungen des Verstärkungsfaktors in Spaltenrichtung ausgeprägter sind als in Zeilenrichtung, dazu tragen auch Schwankungen der Spaltenkapazität bei. Aus diesem Grund wird in Zeilenrichtung nur der Gradient der Verstärkung korrigiert, während in Spaltenrichtung die Korrektur individuell für jede Spalte erfolgt. Dazu werden die Korrekturwerte, wie beim Offset, in einem Schreib-/Lesespeicher RAM abgelegt. Die inverse Verstärkung $1/\beta(i,j)$ ergibt sich durch folgenden Zusammenhang:

$$1/\beta(1,j) = gain = 1 + gain(i) + gain1 * j$$

Zur Bestimmung der Werte für gain(i) und gainl ist eine gleichmäßige helle Beleuchtung, zum Beispiel Aufnahme eines weißen Blattes Papiers, mit einer Integrationszeit Tint, die so gewählt wird, daß die Analog-Digital-Wandler nahezu eine Vollaussteuerung, also zum Beispiel etwa 80 Prozent der Vollaussteuerung erfahren. Eine mittlere Aussteuerung über die gesamte Sensorfläche läßt sich wie folgt berechnen:

$$Ausst = \frac{1}{i_{max} j_{max}} \sum_{i=1}^{i_{max}} \sum_{j=1}^{j_{max}} P(i,j)$$

Die Parameter Gain (i) und Gain1 werden bestimmt durch Auslesen der Pixelwerte aus dem Sensorfeld und nachfolgende Berechnung. Die Parameter werden so bestimmt, daß der Übertragungsfaktor über die Sensorfläche möglichst homogen wird. Ein mögliches Verfahren ist die Minimierung des quadratischen Mittelwertes für das FPN. Bei Anwendung dieses Verfahrens ergeben sich nach einigen Vereinfachungen folgende Zusammenhänge:

$$gain1 = \frac{1}{(j_2 - j_y)j_{max}} \frac{1}{Ausst} \left[ \sum_{i=1}^{i_{max}} P(i,j_2) - \sum P(i,j_1) \right]$$

$$gain(i) = \left[\frac{1}{j_{max}}\frac{1}{Ausst}\sum_{j=1}^{j_{max}} P(i,j)\right] - 1 - gain1\frac{j_{max}+1}{2}\quad,$$

wobei $i_{max}$ die maximale Spaltennummer einer belichteten Spalte, $j_{max}$ die maximale Zeilennummer einer belichteten Zeile und $j_1$ und $j_2$ zwei verschiedene Zeilen sind.

Durch die Verwendung einer von "1" abweichenden Konstante Gain0 in der Gleichung für Gain kann in der Wortbreite für Gain ein Bit gespart werden, weil Gain im Bereich zwischen 0,5 und < 1,0 liegt, also den Wert 1,0 garnicht annimmt. Der Dunkelstrom wird in Abhängigkeit der Integrationszeit $T_{int}$ korrigiert. Zur Einsparung von Speicherkapazität wird nur der Gradient korrigiert. Der Wert für den Dunkelstrom Dark$(i,j,T_{int})$ berechnet sich nach der folgenden Formel:

$$Dark(i,j,T_{int}) = T_{int} * (Dark0 + Dark1 * j + Dark2 * i).$$

Die Koeffizienten werden mit Hilfe der nichtbelichteten Bildpunkte bestimmt, wobei die Integrationszeit $T_{int}$ so groß gewählt wird, daß ca. 50 Prozent der Vollaussteuerung des Sensors erreicht wird. Die Werte für die Bildpunkte ULD, URD, LLD, LRD in Figur 3 werden zur Berechnung der Koeffizienten herangezogen.

Die Koeffizienten Dark0 ... Dark2 werden wie folgt berechnet:

$$Dark1 = \tfrac{1}{2}* (ULD+URD-LLD-LRD)/\Delta j$$

$$Dark2 = \tfrac{1}{2}* (URL+LRD-ULD-LLD)/\Delta i$$

$$Dark0 = \tfrac{1}{4}* (ULD+URD+LLD+LRD)-Dark1 *j_m - Dark2 *i_m,$$

wobei $i_m$ eine mittlere Spalte zwischen ULD und URD und $j_m$ eine mittlere Zeile zwischen ULD und ULV ist und $j_m$ hier beispielsweise 288 und $i_m$ hier beispielsweise 360 gewählt ist.

**Patentansprüche**

1. Verfahren zur belichtungsabhängigen Rausch-Korrektur bei zeilen- und spaltenadressierbaren Bildsensoren, bei dem vom Offset-Rauschen befreite Signale der einzelnen Bildpunktesensoren in digitale Bildpunktwerte (adc $(i,j)$) umgewandelt werden, bei dem korrigierte Bildpunktwerte ($P(i,j)$) aus den digitalen Bildpunktwerten dadurch erhalten werden, daß erstens die digitalen Bildpunktwerte um einen jeweils für eine Spalte bestimmten Offsetwert ($\alpha(i)$) vermindert, zweitens der so verminderte Bildpunktwert mit einer durch eine Näherung bestimmten inversen Verstärkung ($1/\beta(i,j)$) multipliziert und drittens von diesem Produkt ein durch eine weitere Näherung bestimmter Dunkelstromwert (dark$(i,j,T_{int})$) subtrahiert wird.

2. Verfahren nach Anspruch 1, bei dem pro Spalte (i) der Offsetwert ($\alpha(i)$) dadurch ermittelt wird, daß, bei minimaler Integrationszeit, eine Zeile mit nichtbelichtbaren Bildpunkten (NP) ausgelesen, in digitale Werte gewandelt, linearisiert und als Offsetwerte gespeichert werden.

3. Verfahren nach Anspruch 1 oder 2, bei dem, bei gleichmäßiger nahezu vollständiger Aussteuerung, belichtete Bildpunkte (V) ausgelesen werden und die inverse Verstärkung $1/\beta(i,j)$ durch folgende Berechnungen bestimmt wird:

$$1/\beta(i,j) = gain0 + gain(i) + gain1 *j,$$

mit gain0 = 1,

$$Ausst = \frac{1}{i_{max} \, j_{max}} \sum_{i=1}^{i_{max}} \sum_{j=1}^{j_{max}} P(i,j) \, ,$$

$$gain1 = \frac{1}{(j_2 - j_1) \, j_{max}} \frac{1}{Ausst} \left[ \sum_{i=1}^{i_{max}} P(i, j_2) - \sum P(i, j_1) \right]$$

und

$$gain(i) = \left[ \frac{1}{j_{max}} \frac{1}{Ausst} \sum_{j=1}^{j_{max}} P(i,j) \right] - 1 - gain1 \frac{j_{max} + 1}{2} \, ,$$

wobei i die Spaltennummer, j die Zeilennummer, $i_{max}$ die maximale Spaltennummer einer belichteten Spalte, $i_{max}$ die maximale Zeilennummer einer belichteten Zeile sowie j1 und j2 zwei unterschiedliche Spalten sind.

4. Verfahren nach Anspruch 3,
bei dem anstelle von GainO = 1 für GainO ein Wert zwischen 0,5 und kleiner 1 gewählt wird.

5. Verfahren nach einem der Ansprüche 1 bis 4,
bei dem, bei einer Integrationszeit ($T_{int}$) für eine etwa 50 prozentige Aussteuerung, nichtbelichtbare Bildpunkte ULD, URD, LLD und LRD ausgelesen werden und der Dunkelstrom durch folgende Berechnungen daraus bestimmt wird:

$$Dark1 = \frac{1}{2} * (ULD + URD - LLD - LRD) / \Delta j,$$

$$Dark2 = \frac{1}{2} * (URL + LRD - ULD - LLD / \Delta i$$

und

$$Dark0 = \frac{1}{4} * (ULD + URD + LLD + LRD) - Dark1 * j_m - Dark2 * i_m,$$

wobei $\Delta j$ die Anzahl der Zeilen zwischen einer oberen (ULD, URD) und einer unteren (LLD, LRD) nichtbelichteten Zeile und $j_m$ eine mittlere Spaltennummer und $i_m$ eine mittlere Zeilennummer sind.

6. Vorrichtung zur belichtungsabhängigen Rausch-Korrektur bei zeilen- und spaltenadressierbaren Bildsensoren,
bei der ein Bildpunktsensorfeld (APS) vorhanden ist, das verrauschte Bildpunkte ($P(i,j)+dark(i,j,T_{int})$) an eine Korrelationseinrichtung (CDS) liefert, die ihrerseits vom Offset-Rauschen der einzelnen Bildpunkte befreite Bildpunkte ($P''(i,j)$) an einen Analog-Digital-Wandler (ADC) liefert,
bei der eine Linearisierungseinrichtung (LUT) vorhanden ist, die die digitalen Ausgangswerte ($adc(i,j)$) des Analog-Digital-Wandlers mit einer höheren Auflösung besser an den zugehörigen Analogwert anpaßt,
bei der der Reihe nach ein erster Summierer (S1) zur Subtraktion eines jeweils für eine Spalte bestimmten Offsetwertes ($\alpha(i)$), ein Multiplizierer (M) zur Multiplikation mit einer inversen Verstärkung ($1/\beta(i,j)$) und ein zweiter Summierer (S2) zur Subtraktion eines Dunkelstromwertes ($Dark(i,j,T_{int})$) der Linearisierungseinrichtung (LUT) nachgeschaltet sind.

**7.** Vorrichtung nach Anspruch 6,
bei der ein Schreib-/Lesespeicher (RAM) zur Speicherung von Offsetwerten, inversen Verstärkungswerten und Dunkelstromwerten vorhanden ist.

**8.** Vorrichtung nach Anspruch 6 und 7,
bei der eine erste Berechnungseinheit (B1) vorhanden ist, die aus belichteten Bildpunkten (V) eine lineare Näherung einer inversen Verstärkung (1/β(i,j)) ermittelt.

**9.** Vorrichtung nach einem der Ansprüche 6 bis 8,
bei der eine zweite Berechnungseinheit (B2) vorhanden ist, die aus unbelichteten Bildpunkten (NP) eine lineare Näherung eines belichtungszeitabhängigen Dunkelstromes (Dark(i,j,Tint)) ermittelt.

**Claims**

**1.** A method for the exposure-dependent noise correction in image sensors which can be addressed in lines and columns,
in which signals, rid of offset noise, of the individual picture element sensors are converted into digital picture element values (adc(i,j)),
in which corrected picture element values (P(i,j)) are obtained from the digital picture element values by the fact that firstly the digital picture elements values are reduced by an offset value ($\alpha(i)$) determined for a column in each case, secondly the picture element value reduced in this manner is multiplied with an inverse gain (1/β(i,j)) determined by an approximation and thirdly a dark current value (dark(i,j,$T_{int}$) determined by a further approximation is subtracted from this product.

**2.** A method according to Claim 1,
in which for each column (i) the offset value ($\alpha(i)$) is determined by the fact that with a minimal integration time a line with unexposable picture elements (NP) are read out, converted into digital values, linearised and stored as offset values.

**3.** A method according to Claim 1 or 2,
in which, with uniform almost complete level control, exposed picture elements (V) are read out and the inverse gain 1/β(i,j) is determined by the following calculations:

$$1/\beta(i,j) = gain0 + gain(i) + gain1 * j,$$

with gain0 = 1,

$$level\ control = \frac{1}{i_{max} j_{max}} \sum_{i=1}^{i_{max}} \sum_{j=1}^{j_{max}} P(i,j)\ ,$$

$$gain1 = \frac{1}{(j_2 - j_1) j_{max}} \frac{1}{level\ control} \left[ \sum_{i=1}^{i_{max}} P(i,j_2) - \sum P(i,j_1) \right]$$

and

$$gain(i) = \left[\frac{1}{j_{max}} \quad \frac{1}{level\ control} \quad \sum_{j=1}^{j_{max}} P(i,j)\right] -1 -gain1$$

$$\frac{j_{max}+1}{2},$$

in which i is the column number, j the line number, $i_{max}$ the maximum column number of an exposed column, $j_{max}$ the maximum line number of an exposed line and j1 and j2 are two different columns.

4. A method according to Claim 3,
   in which a value between 0.5 and less than 1 is chosen instead of Gain0 = 1 for Gain0.

5. A method according to one of Claims 1 to 4,
   in which, during an integration time ($T_{int}$) for a roughly 50 % level control, non-exposable picture elements ULD, URD, LLD and LRD are read out and the dark current is determined therefrom by the following calculations:

   Dark1 = ½ * (ULD + URD - LLD - LRD) / $\Delta$j,

   Dark2 = ½ * (URL + LRD - ULD - LLD / $\Delta$i

   and

   Dark0 = ¼ * (ULD + URD + LLD + LRD) - Dark1 * $j_m$ - Dark2 * $i_m$,

   in which $\Delta$j is the number of lines between an upper (ULD, URD) and a lower (LLD, LRD) unexposed line and $j_m$ is a mean column number and $i_m$ is a mean line number.

6. An apparatus for the exposure-dependent noise correction in image sensors that can be addressed in lines and columns,
   in which a picture element sensor field (APS) is provided, which delivers noise-infested picture elements ($P(i,j)$ +dark($i,j,T_{int}$)) to a correlation device (CDS), which in turn delivers picture elements ($P''(i,j)$) rid of the offset noise of the individual picture elements to an analog-digital converter (ADC), in which a linearisation device (LUT) is provided, which adapts the digital output values (adc($i,j$)) of the analog-digital converter with a higher definition better to the associated analog value,
   in which in sequence a first adder (S1) for subtracting an offset value ($\alpha(i)$) determined in each case for a column, a multiplier (M) for multiplication with an inverse gain ($1/\beta(i,j)$) and a second adder (S2) for subtracting a dark current value (Dark($i,j,T_{int}$)) are connected after the linearisation device (LUT).

7. An apparatus according to Claim 6,
   in which a read-write memory (RAM) is provided for the storage of offset values, inverse gain values and dark current values.

8. An apparatus according to Claim 6 and 7,
   in which a first calculation unit (B1) is provided, which determines a linear approximation of an inverse gain ($1/\beta$ (i, j) from exposed picture elements (V).

9. An apparatus according to one of Claims 6 to 8,
   in which a second calculation unit (B2) is provided, which determines a linear approximation of an exposure-dependent dark current (Dark(i,j,Tint) from unexposed picture elements (NP).

**Revendications**

1. Procédé de correction du bruit en fonction de l'éclairage des capteurs d'images adressables par ligne et par colonne selon lequel

les signaux dont on a éliminé les bruits et le décalage fourni par les différents capteurs d'images sont convertis en valeur de point d'image numérique (adc(i, j)),

les valeurs de point d'image corrigées (P (i, j)) s'obtiennent à partir des valeurs numériques, de point image, en ce que d'abord on réduit les valeurs numériques de point image d'une valeur de décalage ($\alpha$, (i)) définie chaque fois pour une colonne, en second lieu on multiplie la valeur de point image ainsi réduite par une amplification inverse (1/$\beta$(i, j)),définie par une approximation et, en troisième lieu, on soustrait de ce produit une valeur de courant d'absence de lumière (dark (i, j, $T_{int}$)) définie par une autre approximation.

2. Procédé selon la revendication 1,
**caractérisé en ce que**
par colonne (i) on détermine la valeur de décalage ($\alpha$(i)) **en ce que** pour un temps d'intégration minimum on extrait une ligne avec des points image (NP) non éclairables, on la convertit en valeurs numériques, on la linéarise et on la mémorise comme valeurs de décalage.

3. Procédé selon la revendication 1 ou 2,
selon lequel
pour un réglage pratiquement complet et régulier, on extrait les points image (V) éclairés et on détermine l'amplification inverse 1/$\beta$(i,j) par les calculs suivants :

$$1/\beta(i, j) = gain0 + gain(i) + gain1\ {}^*j,$$

avec gain 0 = 1,

$$\mathrm{Ausst} = \frac{1}{i_{max}\, j_{max}} \sum_{i=1}^{i_{max}} \sum_{j=1}^{j_{max}} P(i, j),$$

$$\mathrm{gain1} = \frac{1}{(j_2 - j_1)\, j_{max}} \frac{1}{\mathrm{Ausst}} \left[ \sum_{i=1}^{i_{max}} P(i, j_2) - \sum P(i, j_1) \right]$$

et

$$\mathrm{gain(i)} = \left[ \frac{1}{j_{max}} \frac{1}{\mathrm{Ausst}} \sum_{j=1}^{j_{max}} P(i, j) \right] - 1 - \mathrm{gain1} \frac{j_{max} + 1}{2},$$

formules dans lesquelles i représente le numéro de la colonne, j le numéro de la ligne, $i_{max}$ le numéro maximum d'une colonne éclairée, $j_{max}$ le numéro de ligne maximum d'une ligne éclairée ainsi que j1 et j2 représentant deux colonnes distinctes.

4. Procédé selon la revendication 3,
dans lequel
à la place de gain0 = 1, pour gain 0 on choisit une valeur comprise entre 0,5 et une valeur inférieure à 1.

5. Procédé selon l'une des revendications 1 à 4,
selon lequel
pour un temps d'intégration $T_{int}$ pour un réglage correspondant sensiblement à 50%, on extrait les points image non susceptibles d'être éclairés ULD, URD, LLD, LRD et on définit le courant de non éclairage par les calculs

suivants :

$$Dark1 = \tfrac{1}{2} * (ULD + URD - LLD - LRD)/\Delta j,$$

$$Dark2 = \tfrac{1}{2} * (URL + LRD - ULD - LLD)/\Delta j,$$

et

$$Dark0 = 1/4 * (ULD + URD + LLD + LRD) - Dark1 * j_m - Dark2 * i_m,$$

formule dans lesquelles $\Delta j$ représente le nombre de lignes entre une ligne supérieure (ULD, URD) et une ligne inférieure (LLD, LRD) non éclairées, et $j_m$ représente un numéro moyen de colonne et $i_m$ un numéro de ligne moyen.

6. Dispositif de correction de bruit en fonction de l'éclairage pour des capteurs d'image adressables par ligne et par colonne, comportant un champ de capteur de point image (APS) qui fournit les points image encombrés de bruits ($P(i, j) + dark(i, j, T_{int})$) à une installation de corrélation (CDS) et celle-ci fournit un convertisseur analogique/ numérique (ADC) des points image ($P''(i, j)$) libérés du bruit/dérive des différents points image, ce convertisseur comportant une installation de linéarisation (LUT) qui adapte les valeurs de départ numérique ($adc(i, j)$) du convertisseur analogique/numérique avec une résolution plus élevée, mieux à la valeur analogique correspondante, pour lequel dans l'ordre, après un premier additionneur (S1) pour soustraire une valeur de décalage ($\alpha(i)$) définie chaque fois pour une colonne, un multiplicateur (M) pour multiplier avec un coefficient d'amplification inverse ($1/\beta(i, j)$) et un second additionneur (S2) pour soustraire une valeur d'intensité d'absence d'éclairage ($Dark(i, j, T_{int})$) de l'installation de linéarisation (LUT).

7. Dispositif selon la revendication 6, comportant une mémoire enregistrement/lecture (RAM) pour recevoir des valeurs de dérive, des valeurs d'amplification inverse et des valeurs d'intensité d'absence d'éclairage.

8. Dispositif selon les revendications 6 et 7, comportant une première unité de calcul (B1) qui détermine une approximation linéaire d'une amplification inverse ($1/\beta(i, j)$) à partir des points image éclairés (V).

9. Dispositif selon l'une des revendications 6 à 8, comportant une seconde unité de calcul (B2) qui détermine une approximation linéaire d'une intensité d'absence d'éclairage ($Dark(i, j, T_{int})$) dépendant du temps d'éclairage à partir de points image (NP) non éclairés.

# FIG 1

**FIG 2**

EP 1 119 965 B1

# FIG 3